# EUROPEAN PATENT SPECIFICATION

(11) **EP 2 691 858 B1**
(45) Date of publication and mention of the grant of the patent: **26.10.2016**
(21) Application number: 11862280.2
(22) Date of filing: 30.03.2011
(51) Int. Cl.: G06F 11/32, G06F 3/0484, G06F 11/30, G06F 11/34

(54) **TIMEFRAME BASED DATA ANALYSIS**
AUF ZEITRAHMEN BASIERENDE DATENANALYSE
ANALYSE DE DONNÉES À FENÊTRE DE TEMPS

(43) Date of publication of application: 05.02.2014
(73) Proprietor: Hewlett Packard Enterprise Development LP, Houston, TX 77070 (US)
(72) Inventor: GORANKA, Medhi, 560048 Bangalore Karnataka (IN)
(74) Representative: Holt, Daniel Richard
(86) International application number: PCT/IN2011/000218
(87) International publication number: WO 2012/131684

(56) References cited:
- EP-A1- 2 222 025
- CN-A- 101 263 499
- US-A1- 2004 064 293
- US-A1- 2004 199 826
- US-A1- 2005 225 639
- US-A1- 2010 185 976
- US-A1- 2010 211 673
- US-B2- 7 076 397

## Description

### Background

Analysis of computing systems has progressed to include a number of performance metrics. These performance metrics can include a number of factors that can be used to monitor the functionality of a computing system. In some previous approaches of analyzing computing systems, performance metrics were used and analyzed without reference to the context in which the data for the performance metrics were gathered and the relationship between the performance metrics.

Document US 2004/0064293 A1 is considered to constitute the closest prior to the present invention since it discloses a computing device implemented method for time frame based data analysis, comprising:
providing a number of performance metrics selected from a group of performance metrics; and
causing a display of data for the number of performance metrics in a number of graphs on a graphical user interface (GUI), wherein the data displayed include data from a time frame indicated by a time frame selector.

According to the present invention, there is proposed a computing device implemented method for timeframe based data analysis according to claim 1, a machine readable computer readable storage medium according to claim 5 and a system according to claim 6.

Dependent claims relate to preferred embodiments of the present invention.

### Brief Description of the Drawings

Figure 1 is a method flow diagram illustrating an example of a method for timeframe based data analysis according to a number of examples of the present disclosure.
Figure 2 illustrates a graphical user interface (GUI) for timeframe based data analysis according to a number of examples of the present disclosure.
Figure 3 illustrates a graphical user interface (GUI) for timeframe based data analysis according to a number of examples of the present disclosure.
Figure 4 illustrates a block diagram of an example of a machine-readable medium (MRM) in communication with processor resources for data analysis according to the present disclosure.
Figure 5 illustrates a block diagram of an example of a system for data analysis according to the present disclosure.

### Detailed Description

Methods, machine-readable media, and systems are provided for timeframe based data analysis. One method for timeframe based data analysis includes providing a number of performance metrics selected from a group of performance metrics and causing a display of data for the number of performance metrics in a number of graphs on a graphical user interface (GUI), wherein the data displayed include data from a timeframe indicated by a timeframe selector.

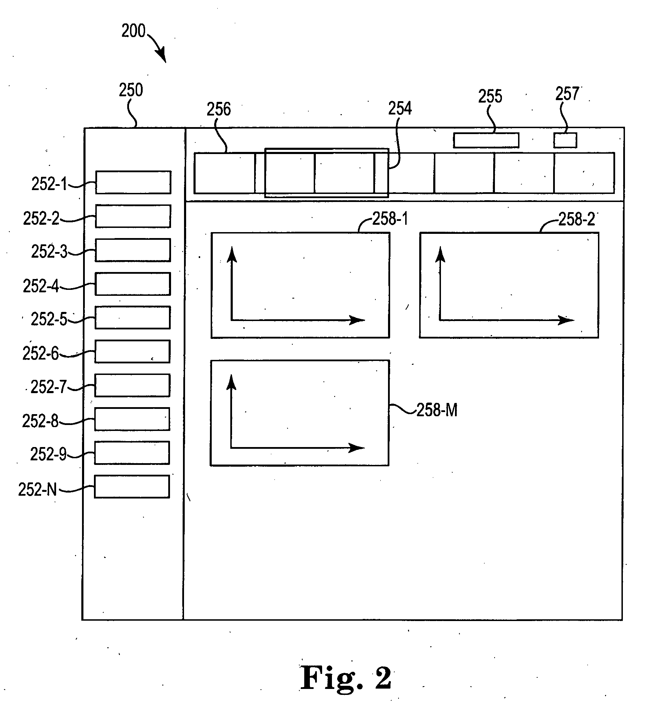

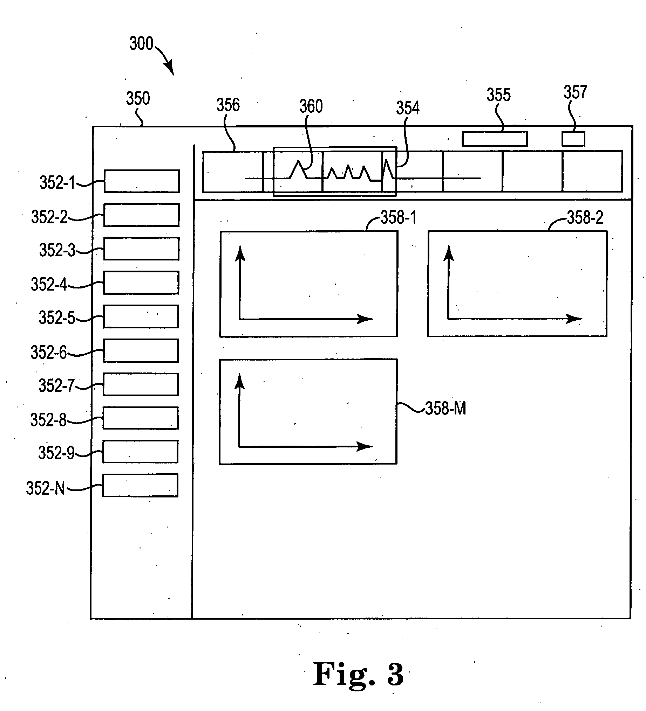

The figures attempt to follow a numbering convention in which the first digit or digits correspond to the drawing figure number and the remaining digits identify an element or component in the drawing. Similar elements or components between different figures may be identified by the use of similar digits. For example, 256 may reference element "56" in Figure 2, and a similar element may be referenced as 356 in Figure 3. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense.

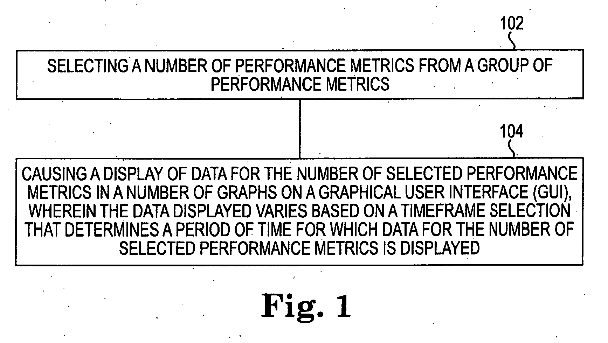

Figure 1 is a method flow diagram illustrating an example of a method for timeframe based data analysis according to a number of examples of the present disclosure. One method for timeframe based data analysis includes selecting a number of performance metrics from a group of performance metrics, as indicated at 102, and causing a display of data for the number of selected performance metrics in a number of graphs on a graphical user interface (GUI), wherein the data displayed varies based on a timeframe selection that determines a period of time for which data for the number of selected performance metrics is displayed, as indicated at 104.

A computing system can include a monitoring system where the monitoring system includes a number of collectors and probes that monitor portions of a computing system. The collectors and probes can log and store data associated with performance metrics of a computing system. The data associated with performance metrics of a computing system can be displayed on a GUI for observation and analysis by a user. The data associated with performance metrics of a computing system can be analyzed to quantify the functionality of portions of the computing systems, to diagnose problems with portions of the computing system, and to determine solutions to problems with portions of the computing system.

In a number of examples, a monitoring system can include a number of performance metrics that can be graphed on a single GUI. The performance metrics can include metrics from a number a data sources. The data sources can be from any portion of a computing system that is monitored and quantifies the performance and/or functionality of a component and/or function of a computing system. The performance metrics can be selected from a group of performance metrics that are listed on a portion of a GUI. The performance metrics can be selected by selecting and dragging a performance metric from a list of performance metrics to a display portion of a GUI.

In a number of examples, the data for the performance metrics included in a graphical display of the performance metrics can be determined by a timeframe selector. The timeframe selector can be placed along a portion of a time range. The graphical display of the performance metrics can include data for the performance metrics from the portion of a time range selected by the timeframe selector. The time range can be in time units, such as hours in a day, days in a week, weeks in a month, months in a year, and/or years. A time unit selector can be used to select the time units, e.g., hours in a day, days in a week, weeks in a month, months in a year, and/or years, for the time range. The timeframe selector can be moved to any portion of the time range to change the timeframe of the data for the performance metrics in the graphical displays. In the graphical displays the x-axis can be the time domain and the x-axis values can be defined, at least partially, by the timeframe selector.

The graphical displays of data for performance metrics based on a timeframe selector can be used to analyze data in the context of events and activities that did or did not take place during certain periods of time. For example, the graphical displays of data for performance metrics can be adjusted to include data at the beginning of a week or an end of a month where that timeframe corresponds to a higher than average load on a portal page. The graphical displays can be adjusted to display week to week or month to month data for performance metrics to identify patterns in the data for the performance metrics. Patterns in the data for the performance metrics can identify a cause of a problem indicated by other performance metrics, such as end user performance metrics and/or reference metrics, for example.

Figure 2 illustrates a graphical user interface (GUI) for timeframe based data analysis according to a number of examples of the present disclosure. In Figure 2, a timeframe based data analysis system 200 includes a graphical user interface (GUI) 250 for displaying data for performance metrics 252. In a number of examples, performance metrics 252-1, 252-2, 252-3, 252-4, 252-5, 252-6, 252-7, 252-8, 252-9, 252-N can be selected from a number of performance metrics. Performance metrics 252-1...252-N can include end user performance metrics, such as user response time, for example, among other end user performance metrics. Performance metrics 252-1...252-N can include infrastructure performance metrics, such as CPU and memory utilization, for example, among other infrastructure performance metrics. In some examples, end user performance metrics can be symptom based performance metrics. Symptom based performance metrics can indicate a problem with a computing system. In some examples, infrastructure performance metrics can be cause based performance metrics. Cause based performance metrics can be used to identify the cause of a problem indicated by a symptom based performance metric.

In Figure 2, the GUI 250 can include a display portion for selecting performance metrics 252-1...252-N in a graphical display. The performance metrics 252-1...252-N can be selected by clicking and dragging a performance metric to graphical display area of the GUI 250. Graphs 258-1, 258-2, 258-M can display data for the selected performance metrics. The data displayed in graphs 258-1...258-M can be defined by timeframe selector 254. Timeframe selector 254 can be placed at any place along time range 256 to indicate a range of time for which to display data for the performance metrics in graphs 258-1...258-M. A time unit selector 255 can be used to select the time units, e.g., hours in a day, days in a week, weeks in a month, months in a year, and/or years, for the time range. A time display selector 257 can be used to select a particular time unit, e.g., a particular hour, day, week, month, or year, to display in the time 256 range and/or in the graphs 258-1 ...258-M.

Figure 3 illustrates a graphical user interface (GUI) for timeframe based data analysis according to a number of examples of the present disclosure. In Figure 3, timeframe based data analysis system 300 includes a graphical user interface (GUI) 350 for displaying data for performance metrics 352, which include similar features at the timeframe based data analysis system 200 described above in association with Figure 2. Performance metrics 352-1, 352-2, 352-3, 352-4, 352-5, 352-6, 352-7, 352-8, 352-9, 352-N can include end user performance metrics, such as user response time, for example, among other end user performance metrics. Performance metrics 352-1...352-N can include infrastructure performance metrics, such as CPU and memory utilization, for example, among other infrastructure performance metrics. In some examples, end user performance metrics can be symptom based performance metric and infrastructure performance metrics can be cause based performance metrics.

In Figure 3, the GUI 350 can include a display portion for selecting performance metrics 352-1...352-N in a graphical display. The performance metrics 352-1...352-N can be selected by clicking and dragging a performance metric to a graphical display area of GUI 350. Graphs 358-1...358-M can display data for the selected performance metrics. The data displayed in graphs 358-1...358-M can be defined by timeframe selector 354. Timeframe selector 354 can be place at any place along time range 356 to indicate a range of time for which to display data for the performance metrics in graphs 358-1, 358-2, 358-M. A time unit selector 355 can be used to select the time units, e.g., hours in a day, days in a week, weeks in a month, months in a year, and/or years, for the time range. A time display selector 357 can be used to select a particular time unit, e.g., a particular hour, day, week, month, or year, to display in the time 356 range and/or in the graphs 358-1...358-M. A performance metric 352-1...352-N can be selected as a reference performance metric and the reference performance metric can be displayed graphically 360 proximate to the timeframe selector 354. The reference performance metric can be a symptom based performance metric where the graphical display of the data for the reference performance metric can indicate a problem with a computing system. Analysis of the cause based performance metrics can take place visually by looking at the graphical representation in light of the symptom based performance metric's graphical representation proximate to the timeframe selector. The reference performance metric included proximate to the timeframe selector can indicate periodic patterns, such as week to week patterns and/or month to month patterns, for example, in the performance metrics over a selected timeframe.

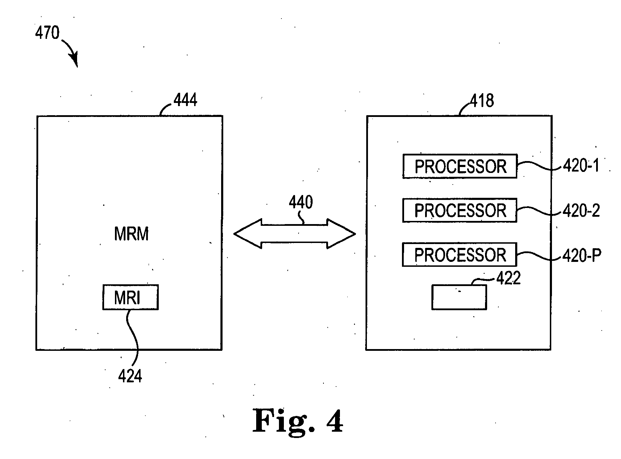

Figure 4 illustrates a block diagram 470 of an example of a machine-readable medium (MRM) 444 in communication with processor resources 420-1, 420-2...420-P for data analysis according to the present disclosure. A machine-readable medium 444 can be in communication with a machine 418 (e.g., a computing device) having processor resources (e.g., a number of individual processors 420-1, 420-2...420-P. The machine 418 can be in communication with, and/or receive a tangible non-transitory MRM 444 storing a set of machine readable instructions 424 executable by the processor resources 420-1, 420-2...420-P, as described herein. The machine 418 may include memory resources 422, and the processor resources 420-1, 420-2...420-P may be coupled to the memory resources 422.

Processor resources 420-1, 420-2...420-P can execute machine-readable instructions 424 that are stored on an internal or external non-transitory MRM 444. A non-transitory MRM (e.g., MRM 444), as used herein, can include volatile and/or non-volatile memory. Volatile memory can include memory that depends upon power to store information, such as various types of dynamic random access memory (DRAM), among others. Non-volatile memory can include memory that does not depend upon power to store information. Examples of non-volatile memory can include solid state media such as flash memory, EEPROM, phase change random access memory (PCRAM), magnetic memory such as a hard disk, tape drives, floppy disk, and/or tape memory, optical discs, digital versatile discs (DVD), Blu-ray discs (BD), compact discs (CD), and/or a solid state drive (SSD), flash memory, etc., as well as other types of machine-readable media.

The non-transitory MRM 444 can be integral, or communicatively coupled, to a computing device, in either in a wired or wireless manner. For example, the non-transitory MRM 444 can be an internal memory, a portable memory, a portable disk, or a memory associated with another computing resource (e.g., enabling the machine-readable instructions to be transferred and/or executed across a network such as the Internet).

The.MRM 444 can be in communication with the processor resources 420-1, 420-2...420-P via a communication path 440. The communication path 440 can be local or remote to a machine associated with the processor resources 420-1, 420-2...420-P. Examples of a local communication path 440 can include an electronic bus internal to a machine such as a computer where the MRM 444 is one of volatile, non-volatile, fixed, and/or removable storage medium in communication with the processor resources 420-1, 420-2....420-P via the electronic bus. Examples of such electronic buses can include Industry Standard Architecture (ISA), Peripheral Component Interconnect (PCI), Advanced Technology Attachment (ATA), Small Computer System Interface (SCSI), Universal Serial Bus (USB), among other types of electronic buses and variants thereof.

The communication path 440 can be such that the MRM 444 is remote from the processor resources e.g., 420-1, 420-2...420-P such as in the example of a network connection between the MRM 444 and the processor resources e.g., 420-1, 420-2...420-P. That is, the communication path 440 can be a network connection. Examples of such a network connection can include a local area network (LAN), a wide area network (WAN), a personal area network (PAN), and the Internet, among others. In such examples, the MRM 444 may be associated with a first computing device and the processor resources 420-1, 420-2...420-P may be associated with a second computing device.

The processor resources 420-1, 420-2...420-P can retrieve and display data for a number of performance metrics via an application. The application can be running on the processor resources 420-1, 420-2...420-P, or on other processor resources coupled to the processor resources 420-1, 420-2...420-P (e.g., via a network connection): The processor resources 420-1, 420-2...420-P can also record actions and interactions of the user with respect to portions of the computing system to generate and store data associated with a number of performance metrics. The processor resources 420-1, 420-2...420-P can be used to display and analyze data for a number of performance metrics, as described herein.

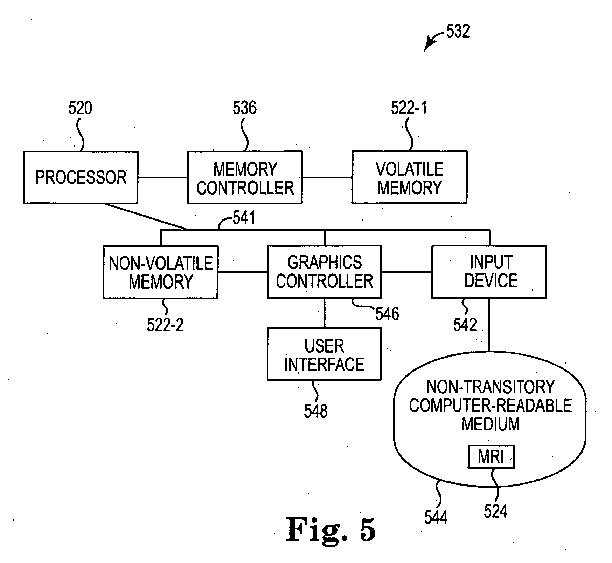

Figure 5 illustrates a block diagram of an example of a system 532 for data analysis according to the present disclosure. However, examples of the present disclosure are not limited to a particular system (e.g., computing system) configuration. The system 532 can include processor resources 520 (e.g., analogous to processor resources 420-1, 420-2...420-P illustrated in Figure 4) for executing instructions stored in a tangible non-transitory medium (e.g., volatile memory 522-1, non-volatile memory 522-2, and/or MRM 544). For example, the processor resources 520 can include one or a plurality of processors such as in a parallel processing system. Although not specifically illustrated, the system 532 can include an application specific integrated circuit (ASIC) including logic configured to perform various examples of the present disclosure.

The processor resources 520 can control the overall operation of the system 532. The processor resources 520 can be connected to a memory controller 536, which can read and/or write data from and/or to volatile memory 522-1. The memory controller 536 can include an ASIC and/or a processor with its own memory resources (e.g., volatile and/or non-volatile memory). The volatile memory 522-1 can include one or a plurality of memory modules (e.g., chips). The processor resources 520 can be connected to a bus 541 to provide for communication between the processor resources 520 and other portions of the system 532. The non-volatile memory 522-2 can provide persistent data storage for the system 532.

The system 532 can include memory resources such as volatile memory 522-1, non-volatile memory 522-2, and/or MRM 544. The system 532 can include machine-readable instructions stored in memory resources, such as volatile memory 522-1, non-volatile memory 522-2, and/or MRM 544, on a number of devices. The memory resources, or some portion thereof, can store data associated with a number of performance metrics. Connections between the memory resources (e.g., volatile memory 522-1, non-volatile memory 522-2, and/or MRM 544) and the processor resources 520 can be local and/or remote (e.g., via a network connection).

The system 532 can include and/or receive a tangible non-transitory MRM 544 (e.g., analogous to MRM 444 illustrated in Figure 4) storing a set of machine-readable instructions 524 (e.g., software) via an input device 542. Although not specifically illustrated, the system 532 can include a number of input devices 542, such as a keyboard, mouse, touch screen display, memory reader (e.g., optical memory reader, magnetic memory reader, solid state memory reader, etc.), among other input devices.

The instructions can be executed by the processor resources 520 to retrieve, display, and analyze data for a number of performance metrics. The instructions can be executed by the processor resources 520 to determine which performance metric data to retrieve and display based on a timeframe indicated by the timeframe selector. Instructions can be executed by the processor resources 520 to display data for a number of performance metrics in a number of graphs.

The graphics controller 546 can connect to a user interface 548, which can provide an image to a user based on activities performed by the system 532. For example, instructions can be executed by the processor resources 520 to cause the processor resources 520 to present data for a number of performance metrics to a user (e.g., via user interface 548) in response to the user selecting a timeframe and/or performance metrics for analysis. The user's selections can be used to help identify the data for the performance metrics that will be displayed.

Although specific examples have been illustrated and described herein, those of ordinary skill in the art will appreciate that an arrangement calculated to achieve the same results can be substituted for the specific examples shown. This disclosure is intended to cover adaptations or variations of one or more examples of the present disclosure. It is to be understood that the above description has been made in an illustrative fashion, and not a restrictive one. Combination of the above examples, and other examples not specifically described herein will be apparent to those of skill in the art upon reviewing the above description. The scope of the one or more examples of the present disclosure includes other applications in which the above structures and methods are used. Therefore, the scope of one or more examples of the present disclosure should be determined with reference to the appended claims, along with the full range of equivalents to which such claims are entitled.

In Detailed Description, some features are grouped together in a single embodiment for the purpose of streamlining the disclosure. This method of disclosure is not to be interpreted as reflecting an intention that the disclosed examples of the present disclosure have to use more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device implemented method for timeframe based data analysis, comprising:
providing a number of performance metrics (352-1...352-N) selected from a group of performance metrics;
causing a display of data for the number of performance metrics (352-1...352-N) in a number of graphs (358-1...358-M) on a graphical user interface (350),
wherein the data displayed include data from a timeframe indicated by a timeframe selector (354), and
wherein the timeframe selector (354) can be placed at any place along a time range display (356) to indicate a range of time for which to display data for the performance metrics (352-1...352-N) in the graphs (358-1...358-M);
selecting a performance metric (352- 1 ...352-N) as a reference performance metric; and
displaying the reference performance metric (360) on the time range display (356) of the graphical user interface (350) proximate to the timeframe selector (354).

2. The method of claim 1, wherein displaying data for the number of performance metrics (352-1...352-N) includes the timeframe selector (354) defining a period of time for which data for the number of performance metrics (352-1...352-N) is displayed.

3. The method of claim 1, wherein the method includes updating the data displayed based on the timeframe selector (354) defining a number of timeframe selections.

4. The method of claim 1, wherein displaying data for the number of performance metrics (352-1... 352-N) includes displaying one or more of the number of performance metrics (352-1...352-N) on a first graph and one or more of the number of performance metrics (352-1... 352-N) on a second graph.

5. A machine-readable non-transitory medium storing a set of instructions executable by a machine to cause the machine to implement a method for timeframe based data analysis according to one of claims 1 to 4.

6. A system for timeframe based data analysis, comprising:
a machine including processor resources; and
machine-readable instructions that, when executed by the processor resources, cause the processor resources to:
select a number of performance metrics (352-1...352-N) from a group of performance metrics;
retrieve data for the number of selected performance metrics (352-1... 352-N);
display data for the number of selected performance metrics (352-1...352-N),
wherein the display of data for the number of selected performance metrics (352-1...352-N) includes data from a selected a timeframe via a timeframe selector (354), and
wherein the timeframe selector (354) can be placed at any place along a time range display (356) to indicate a range of time for which to display data for the performance metrics;
select a performance metric (352- 1 ...352-N) as a reference performance metric; and
display the reference performance metric (360) on the time range display (356) of a graphical user interface (350) proximate to the timeframe selector (354).

## Patentansprüche

1. In Rechnervorrichtung implementiertes Verfahren für zeitrahmenbasierte Datenanalyse, Folgendes umfassend:
Bereitstellen mehrerer Leistungsmetriken (352-1...352-N), ausgewählt aus einer Gruppe von Leistungsmetriken;
Auslösen einer Datenanzeige für die mehreren Leistungsmetriken (352-1...352-N) in mehreren Graphen (358-1...358-M) auf einer grafischen Benutzeroberfläche (350),
wobei die angezeigten Daten Daten aus einem durch einen Zeitrahmenselektor (354) angegebenen Zeitrahmen enthalten, und
wobei der Zeitrahmenselektor (354) an jeder Stelle entlang einer Zeitbereichsanzeige (356) platziert werden kann, um einen Zeitbereich anzugeben, für den Daten für die Leistungsmetriken (352-1...352-N) in den Graphen (358-1...358-M) anzuzeigen sind;
Auswählen einer Leistungsmetrik (352-1...352-N) als eine Referenzleistungsmetrik; und
Anzeigen der Referenzleistungsmetrik (360) auf der Zeitbereichsanzeige (356) der grafischen Benutzeroberfläche (350) in der Nähe des Zeitrahmenselektors (354).

2. Verfahren nach Anspruch 1, wobei das Anzeigen von Daten für die mehreren Leistungsmetriken (352-1...352-N) beinhaltet, dass der Zeitrahmenselektor (354) einen Zeitraum definiert, für den Daten für die mehreren Leistungsmetriken (352-1...352-N) angezeigt werden.

3. Verfahren nach Anspruch 1, wobei das Verfahren das Aktualisieren der angezeigten Daten auf der Grundlage des Zeitrahmenselektors (354), der mehrere Zeitrahmenauswahlen definiert, enthält.

4. Verfahren nach Anspruch 1, wobei das Anzeigen von Daten für die mehreren Leistungsmetriken (352-1...352-N) das Anzeigen von einer oder mehreren der mehreren der Leistungsmetriken (352-1...352-N) auf einem ersten Graphen und von einer oder mehreren der mehreren der Leistungsmetriken (352-1...352-N) auf einem zweiten Graphen enthält.

5. Maschinenlesbares nichtflüchtiges Medium, auf dem eine Reihe von Anweisungen gespeichert ist, die durch eine Maschine ausführbar sind, um zu bewirken, dass die Maschine ein Verfahren zur zeitrahmenbasierten Datenanalyse nach einem der Ansprüche 1 bis 4 implementiert.

6. System für zeitrahmenbasierte Datenanalyse, Folgendes umfassend:
eine Maschine, die Prozessorressourcen enthält; und
maschinenlesbare Anweisungen, die, wenn durch die Prozessorressourcen ausgeführt, bewirken, dass die Prozessorressourcen:
mehrere Leistungsmetriken (352-1...352-N) aus einer Gruppe von Leistungsmetriken auswählen;
Daten für die mehreren ausgewählten Leistungsmetriken (352-1...352-N) abrufen;
Daten für die mehreren ausgewählten Leistungsmetriken (352-1...352-N) anzeigen,
wobei die Anzeige von Daten für die mehreren ausgewählten Leistungsmetriken (352-1...352-N) Daten von einem ausgewählten einem Zeitrahmen über einen Zeitrahmenselektor (354) enthält, und
wobei der Zeitrahmenselektor (354) an einer beliebigen Stelle entlang einer Zeitbereichsanzeige (356) platziert werden kann, um einen Zeitbereich anzugeben, für den Daten für die Leistungsmetriken anzuzeigen sind;
eine Leistungsmetrik (352-1...352-N) als eine Referenzleistungsmetrik auswählen; und
die Referenzleistungsmetrik (360) auf der Zeitbereichsanzeige (356) einer grafischen Benutzeroberfläche (350) in der Nähe des Zeitrahmenselektors (354) anzeigen.

## Revendications

1. Procédé implémenté dans un dispositif informatique pour des analyses de données fondées sur un bloc de temps, comprenant :
la production d'un certain nombre de mesures de performances (352-1... 352-N) choisi dans un groupe de mesures de performances ;
la production d'un affichage de données pour le nombre de mesures de performances (352-1... 352-N) dans un certain nombre de graphes (358-1... 358-M) sur une interface graphique d'utilisateur (350),
les données affichées comprenant des données provenant d'un bloc de temps indiqué par un sélecteur de bloc de temps (354), et
le sélecteur de bloc de temps (354) pouvant être placé en tout lieu le long d'un affichage d'intervalle de temps (356) pour indiquer un intervalle de temps pour lequel afficher des données pour les mesures de performances (352-1... 352-N) dans les graphes (358-1... 358-M) ;
la sélection d'une mesures de performances (352-1... 352-N) en tant que mesure des performances de référence ; et
l'affichage de la mesure des performances de référence (360) sur l'affichage d'intervalle de temps (356) de l'interface graphique d'utilisateur (350) à côté du sélecteur de bloc de temps (354).

2. Procédé selon la revendication 1, dans lequel l'affichage de données pour le nombre de mesures de performances (352-1... 352-N) comprend la définition, par le sélecteur de bloc de temps (354), d'une durée pour laquelle les données pour le nombre de mesures de performances (352-1... 352-N) s'affichent.

3. Procédé selon la revendication 1, le procédé comprenant la mise à jour des données affichées en fonction du sélecteur de bloc de temps (354) définissant un certain nombre de sélections de blocs de temps.

4. Procédé selon la revendication 1, dans lequel l'affichage de données pour le nombre de mesures de performances (352-1... 352-N) comprend l'affichage d'au moins un nombre de mesures de performances (352-1... 352-N) sur un premier graphe et au moins un nombre de mesures de performances (352-1... 352-N) sur un deuxième graphe.

5. Support non transitoire lisible par une machine enregistrant un ensemble d'instructions exécutables par une machine pour amener la machine à mettre en oeuvre un procédé d'analyse de données fondé sur un bloc de temps selon l'une des revendications 1 à 4.

6. Système d'analyse de données fondée sur un bloc de temps, comprenant :
une machine contenant des ressources de processeur ; et
des instructions lisibles par une machine qui quand elles sont exécutées par les ressources de processeur, amènent les ressources de processeur:
à sélectionner un certain nombre de mesures de performances (352-1... 352-N) dans un groupe de mesures de performances ;
à récupérer des données pour le nombre de mesures de performances (352-1... 352-N) ;
à afficher des données pour le nombre de mesures de performances (352-1... 352-N),
l'affichage de données pour le nombre de mesures de performances (352-1... 352-N) comprenant des données issues d'un bloc de temps sélectionné par le biais d'un sélecteur de bloc de temps (354), et
le sélecteur de bloc de temps (354) pouvant être placé en tout lieu le long d'un affichage d'intervalle de temps (356) pour indiquer un intervalle de temps pour lequel afficher des données pour les mesures de performances ;
à sélectionner une mesure de performances (352-1... 352-N) en tant que mesure des performances de référence ; et
à afficher la mesure des performances de référence (360) sur l'affichage d'intervalle de temps (356) d'une interface graphique d'utilisateur (350) proche du sélecteur de bloc de temps (354).
